# DEMANDE DE BREVET EUROPEEN

(11) **EP 0 841 489 A1**
(43) Date de publication de la demande: **13.05.1998**
(21) Numéro de dépôt: 97402416.8
(22) Date de dépôt: 14.10.1997
(51) Int. Cl.: F16B 7/22

(54) **Structure tubulaire constituée par l'assemblage d'au moins trois tubes**

(30) Priorité: 06.11.1996 FR 9613504
(71) Demandeur: ATELIERS REUNIS CADDIE, F-67301 Schiltigheim Cedex (FR)
(72) Inventeur: Joseph, Alice, 67300 Schiltigheim (FR); Le Marchand, Alain, 67116 Reichstett (FR); Schaeffer, Pascal, 67440 Singrist (FR)
(74) Mandataire: CABINET BONNET-THIRION

(57) **Abrégé**

Structure tubulaire constituée par l'assemblage d'au moins trois tubes, à savoir un premier (18) et un troisième (12) liés par une de leurs extrémités à la paroi extérieure d'un deuxième tube (17), transversalement par rapport à celui-ci (17) tout en étant alignés l'un (18) par rapport à l'autre (17), le troisième tube (12) portant, au voisinage de son extrémité, une noix (20) traversée par un alésage fileté intérieurement dans lequel est vissée la tige filetée d'une vis (21) qui traverse une ouverture (22) circulaire prévue dans une paroi du deuxième tube (17) et correspondant au diamètre de ladite tige filetée, à un jeu de montage près, lequel présente dans sa paroi latérale opposée à celle-ci une ouverture (23) traversable par la tête de ladite vis (21): le premier tube (18) est lié au deuxième tube (17) par un élément de liaison (30) qui comporte, d'une part, un corps (35) ayant une face transversale d'appui destinée à coopérer avec la paroi latérale du deuxième tube (17) au droit de l'ouverture (23) qu'elle présente, et, d'autre part, un pied (36) dont la pointe est reliée à la face d'appui par une face inclinée, la hauteur de la pointe du pied (36) et la largeur de celui-ci étant inférieures à la plus petite dimension transversale de l'ouverture (23) et la plus grande dimension transversale du pied (36) étant plus grande que la plus grande dimension transversale de ladite ouverture (23).

## Description

La présente invention a pour objet une structure tubulaire.

Les structures tubulaires, réalisées par l'assemblage de tubes, dont la section peut être circulaire, rectangulaire, carrée, ou autre, et leurs applications sont bien connues : elles permettent, par exemple, la réalisation de rayonnages de rangement ou de présentation, qu'ils soient fixes ou mobiles.

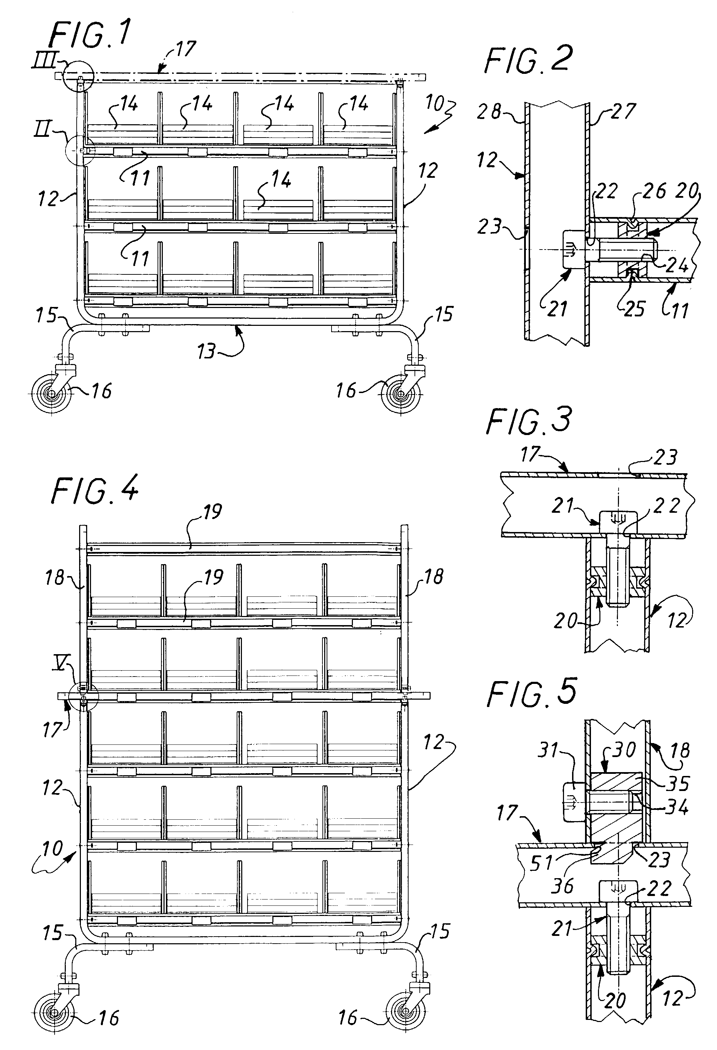

La figure 1 montre un exemple de structure tubulaire, ici un chariot de présentation 10 ; elle est réalisée par l'assemblage de tubes, ici de section carrée, horizontaux 11 et verticaux 12 ; elle est utilisée pour supporter des rayonnages recevant des produits 14 ; ici, les tubes 12 sont les ailes d'un tube 13 plié en U dont l'âme horizontale, placée à la partie inférieure, reçoit par vissage des profilés 15 en L portant des roulettes 16.

L'assemblage des tubes horizontaux 11 et des tubes verticaux 12 est visible sur la figure 2.

A l'intérieur du tube 11, au voisinage de son extrémité, est montée une noix 20 traversée selon son axe par un alésage 24 fileté intérieurement ; la noix 20 est solidaire du tube 11, au moins axialement ; ici, pour ce faire, la noix 20 présente une gorge 25 dans laquelle est repoussée partiellement en 26 la matière constituant les parois du tube 11 ; ladite matière peut être repoussée sur deux parois opposées du tube 11 ou sur ses quatre parois.

La noix 20 coopère par son alésage fileté 24 avec une vis 21 dont la tige présente un filetage extérieur correspondant au filetage intérieur de l'alésage 24 de la noix 20.

Le tube 12 présente sur chacune de deux de ses parois qui se font face une ouverture circulaire : l'une 22 a son diamètre qui correspond, au jeu de montage près, au diamètre de la tige de la vis 21, et l'autre 23 a son diamètre qui correspond, au jeu de montage près, au diamètre extérieur de la tête de la vis 21, ici une vis à tête cylindrique à six pans creux.

Pour réaliser l'assemblage en équerre des tubes 11 et 12, il suffit de plaquer l'extrémité du tube 11 contre la paroi 27, dite intérieure, du tube 12, laquelle paroi intérieure 27 est celle qui présente l'ouverture 22 qui correspond à la tige de la vis 21, d'introduire la vis 21 à travers l'ouverture 23 prévue dans la paroi 28, dite extérieure, du tube 12, ouverture 23 dont le diamètre correspond à la tête de la vis 21, et de visser la vis 21 dans la noix 20 jusqu'à ce que la tête de la vis 21, en appui sur la face interne de la paroi intérieure 27, applique celle-ci contre l'extrémité du tube 11 ; après assemblage, un bouchon, non représenté, peut être placé dans l'ouverture 23 pour finition.

Comme on le voit, un tel assemblage est simple, pratique et efficace.

Il est possible, en utilisant ce mode d'assemblage, d'ajouter un rayonnage au chariot qui vient d'être décrit en ajoutant des tubes horizontaux 17 à la partie supérieure des tubes 12, comme montré en traits mixtes sur la figure 1, la liaison des tubes 12 et 17 étant montrée sur la figure 3.

Pour rehausser davantage le chariot 10, à partir des tubes horizontaux 17, on pourrait relier des tubes verticaux aux tubes horizontaux 17 en utilisant le mode de fixation ci-dessus avec noix 20 et vis 21 ; mais, comme on le comprendra aisément, dans ce cas lesdits tubes verticaux ne pourront pas être à l'aplomb des tubes verticaux 12 du chariot 10.

La présente invention a pour but de proposer une structure tubulaire mettant en oeuvre un élément de liaison permettant de résoudre simplement ce problème, en mettant à profit l'existence de l'ouverture 23 des tubes horizontaux 17 ayant permis le passage des vis 21 pour leur fixation aux tubes verticaux 12.

Ainsi, selon l'invention, une structure tubulaire constituée par l'assemblage d'au moins trois tubes, à savoir un premier et un troisième liés par une de leurs extrémités à la paroi extérieure d'un deuxième tube, transversalement par rapport à celui-ci tout en étant alignés l'un par rapport à l'autre, le troisième tube portant, au voisinage de son extrémité, une noix traversée par un alésage fileté intérieurement dans lequel est vissée la tige filetée d'une vis qui traverse une ouverture circulaire prévue dans une paroi du deuxième tube et correspondant au diamètre de ladite tige filetée, à un jeu de montage près, lequel présente dans sa paroi latérale opposée à celle-ci une ouverture traversable par la tête de ladite vis est caractérisée par le fait que le premier tube est lié au deuxième tube par un élément de liaison qui comporte, d'une part, un corps cylindrique de section identique à la section intérieure du premier tube mais de dimensions légèrement inférieures, ledit corps ayant une face transversale d'appui destinée à coopérer avec la paroi latérale du deuxième tube au droit de l'ouverture qu'elle présente, et, d'autre part, un pied dont la pointe est reliée à la face d'appui du corps par une face inclinée, la hauteur de la pointe du pied et la largeur de celui-ci étant inférieures à la plus petite dimension transversale de l'ouverture et la plus grande dimension transversale du pied étant plus grande que la plus grande dimension transversale de ladite ouverture, en sorte que le pied peut être introduit dans l'ouverture, en inclinant l'élément de liaison par rapport au deuxième tube, mais ne peut pas retraverser l'ouverture lorsque la face d'appui coopère avec la paroi latérale du deuxième tube qui présente l'ouverture du fait de la venue en butée, contre le bord intérieur de l'ouverture, de la face inclinée du pied.

De préférence, la pointe du pied est axialement globalement à l'aplomb de la paroi extérieure du corps et sa face arrière est intérieurement en retrait par rapport à ladite paroi.

Avantageusement, la face arrière et la plante du pied sont reliées par une face convexe ; la face convexe est cylindrique à section polygonale ; la face convexe est cylindrique à section circulaire.

De préférence, l'élément de liaison est destiné à être solidarisé au premier tube par vissage ; l'élément de liaison est muni d'un alésage transversal fileté intérieurement.

Avantageusement, la section transversale du corps cylindrique de l'élément de liaison est rectangulaire ainsi que celle du premier tube destiné à recevoir ledit corps ; le pied de l'élément de laision est cylindrique, à génératrices parallèles à l'une des faces du corps.

De préférence, l'ouverture est circulaire et le contour apparent du pied est un rectangle dont la diagonale est supérieure au diamètre de l'ouverture.

Avantageusement, selon une première forme de réalisation de structure tubulaire, dans laquelle deux premiers tubes sont reliés transversalement à un autre tube, les pieds des éléments de liaison, associés à deux premiers tubes qui se font face, sont disposés symétriquement, la face inclinée de l'un tournant le dos à la face inclinée de l'autre, et les deux ouvertures du deuxième tube sont positionnées à une distance l'une de l'autre telle que les faces inclinées des deux pieds ne viennent au contact, chacune, avec le bord intérieur de l'ouverture correspondante, que lorsque les éléments de liaison sont chacun solidarisé à un premier tube par serrage de vis, les extrémités des premiers tubes se rapprochant alors l'une de l'autre, légèrement, élastiquement.

En variante, deux premiers tubes étant destinés à être reliés transversalement à un autre tube, et les éléments de liaison étant chacun solidarisé à un premier tube, les pieds des éléments de liaison, associés à deux premiers tubes qui se font face, sont disposés symétriquement, la face inclinée de l'un faisant face à la face inclinée de l'autre, et les deux ouvertures du deuxième tube sont positionnées à une distance l'une de l'autre telle que, lorsque les faces inclinées des deux pieds sont au contact, chacune, avec le bord intérieur de l'ouverture correspondante, les deux premiers tubes sont à une distance l'un de l'autre légèrement supérieure à la longueur de l'autre tube auquel on va les relier transversalement par serrage de vis.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue de face en élévation d'une structure tubulaire connue, utilisée pour la réalisation d'un chariot de présentation ;
- la figure 2 est une vue agrandie de la loupe II de la figure 1 ;
- la figure 3 est une vue agrandie de la loupe III de la figure 1 ;
- la figure 4 est une vue de face en élévation du chariot de la figure 1 rehaussé grâce à l'invention ;
- la figure 5 est une vue agrandie de la loupe V de la figure 4 ;
- la figure 6 est une vue en élévation de l'élément de liaison seul à plus grande échelle par rapport à la figure 5 ;
- la figure 7 est une vue selon la flèche VII de la figure 6 ;
- les figures 8 et 9 montrent deux étapes de la mise en oeuvre selon l'invention de l'élément de liaison ;
- la figure 10 est une vue en coupe selon X-X de la figure 9.

Le problème consiste donc à rehausser le chariot 10, comme le montre la figure 4, par des tubes horizontaux 19 et des tubes verticaux 18, au delà des tubes horizontaux 17, les tubes verticaux 18 étant dans le prolongement des tubes 1 2.

Les tubes 17 et 12 étant liés par la vis 21 vissée dans la noix 20, l'invention met à profit l'ouverture 23, qui a permis le passage et le vissage de la vis 21, pour réaliser la liaison entre le tube 18 et le tube 17, grâce à un élément de liaison 30.

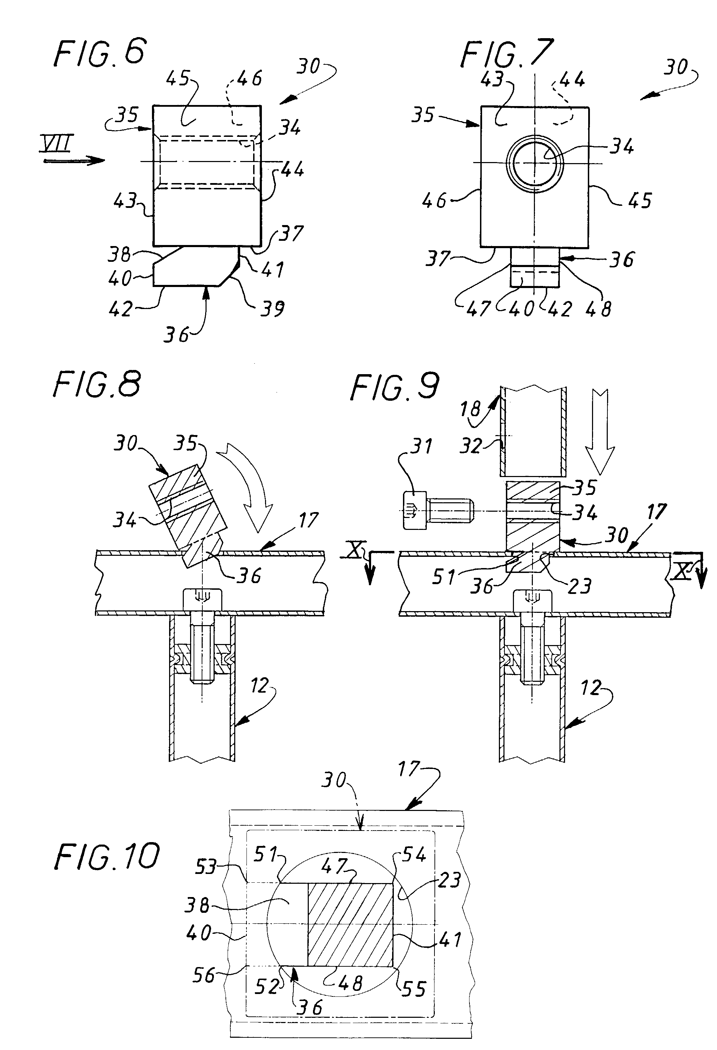

L'élément de liaison 30, mieux visible sur les figures 6 et 7, comporte un corps 35 cylindrique dont la section est identique à la section intérieure du tube 18, mais de dimensions légèrement inférieures, comme montré sur la figure 5 ; ici, selon l'exemple représenté, la structure tubulaire est réalisée à partir de tubes de section carrée ; le corps 35 de l'élément de liaison 30 est donc globalement parallélépipédique, limité notamment par quatre faces planes latérales 43 à 46, parallèles deux à deux : 43-44, d'une part, et 45-46, d'autre part ; mais on comprendra aisément que l'invention s'applique quelle que soit la section des tubes utilisés : il suffit d'adapter la section du corps 35 à celle desdits tubes.

A partir de l'une de ses faces transversales, ici la face plane 37, destinée à venir en appui sur une face extérieure, ici également plane, du tube 17, le corps 35 est prolongé par un pied 36.

Le pied 36 est cylindrique, ses génératrices étant perpendiculaires aux faces 45, 46 du corps 35, c'est-à-dire, par rapport à la figure 6, perpendiculaires au plan de cette figure ; la pointe 40 du pied 36 est plane et globalement à l'aplomb de la face 43 du corps 35 et dans le plan de celle-ci ; la pointe 40 est raccordée à la face d'appui 37 par une face plane inclinée 38 ; la face arrière 41 du pied 36 est parallèle à la face 44 en étant située à distance du plan de celle-ci, vers l'intérieur par rapport au corps 35 ; la plante 42 du pied 36 est parallèle à la face d'appui 37 du corps 35 et raccordée à la face arrière 41 par une face convexe 39 dont la section transversale est ici polygonale ; en variante, une telle section pourrait être circulaire.

Le pied 36 est limité latéralement par deux faces latérales 47, 48 parallèles aux faces 46 et 45 du corps 35 en étant situées à distance du plan de celles-ci, respectivement, vers l'intérieur par rapport au corps 35.

Comme cela est montré sur les figures, la hauteur de la pointe 40 du pied 36, mesurée parallèlement à l'axe du corps 35, ainsi que la largeur du pied 36, mesurée perpendiculairement à ses faces latérales 47 et 48, sont inférieures à la plus petite dimension transversale de l'ouverture 23, ici le diamètre de ladite ouverture ; ainsi, le pied 36 peut être introduit dans l'ouverture 23 en inclinant l'élément de liaison 30 par rapport au deuxième tube 17, comme cela est illustré par la figure 8.

Par ailleurs, la plus grande dimension transversale du pied 36 est plus grande que la plus grande dimension de l'ouverture : selon l'exemple représenté, en se reportant à la figure 10, on voit que le contour apparent du pied 36 est un rectangle 53-54-55-56 ; ici donc, la plus grande dimension transversale du pied 36 est une diagonale de ce rectangle, laquelle est choisie plus grande que le diamètre de l'ouverture circulaire 23 ; dans ces conditions, après avoir fait basculer l'élément de liaison 30 dans le sens de la flèche de la figure 8 jusqu'à ce que sa face d'appui 37 coopère avec la paroi latérale du deuxième tube 17 qui présente l'ouverture 23, figure 9, on voit que l'élément de liaison 30 ne peut pas, dans cette position, retraverser l'ouverture 23 vers l'extérieur, grâce à la venue en butée en 51 et 52 de la face inclinée 38 du pied 36 contre le bord intérieur de l'ouverture 23.

Il suffit alors de lier le tube 18 à l'élément de liaison 30 : ici, le corps 35 est muni d'un alésage transversal 34 fileté intérieurement; un trou 32 dans la paroi du premier tube 18 permet le passage de la tige filetée d'une vis 31, ici à tête cylindrique à six pans creux, vissée dans l'alésage 34 et réalisant l'assemblage du tube 18 et de l'élément de fixation 30. La structure tubulaire, et notamment les tubes 19, participe au maintien en position relative des tubes 18 et 17, ici perpendiculaires, et donc à la liaison assurée par l'élément de fixation 30 entre les tubes 18 et 17.

Plus précisément, en choisissant convenablement les caractéristiques dimensionnelles de l'élément de liaison 30, et d'autres décrites ci-dessous, il est possible, lors d'une opération de vissage, de provoquer le déplacement de l'élément de liaison 30 pour appliquer sa face inclinée 38 contre le bord intérieur de l'ouverture 23 et venir coincer la paroi du tube 17 entre la face d'appui 37 et la face inclinée 38 de l'élément de liaison 30, ce qui dès lors assure une bonne rigidification de l'assemblage.

Ainsi, ceci est réalisé, selon une première façon de procéder, au moment du serrage des vis 31 d'assemblage des éléments de liaison 30 aux tubes verticaux 18 déjà assemblés par des vis 21 aux tubes horizontaux 19, en prévoyant que, d'une part, les pieds 36 des éléments de liaison 30, associés aux deux tubes verticaux 18 qui se font face, sont disposés symétriquement, la face inclinée 38 de l'un tournant le dos à la face inclinée 38 de l'autre, et que, d'autre part, les deux ouvertures 23 du tube 17 sont positionnées à une distance l'une de l'autre telle que les faces inclinées 38 des deux pieds 36 ne viennent au contact, chacune, avec le bord intérieur de l'ouverture 23 correspondante, que lorsque les éléments de liaison 30 sont chacun solidarisé à un tube 18, les extrémités des tubes 18 se rapprochant l'une de l'autre, légèrement, élastiquement.

La rigidification de l'assemblage évoquée ci-dessus peut être également réalisée, selon une seconde façon de procéder, au moment du serrage des vis (telles que 21 figure 2) pour l'assemblage des tubes horizontaux 19 et des tubes verticaux 18, les éléments de liaison 30 étant chacun solidarisé à un tube 18, en prévoyant que, d'une part, les pieds 36 des éléments de liaison 30, associés aux deux tubes verticaux 18 qui se font face, sont disposés symétriquement, la face inclinée 38 de l'un faisant face à la face inclinée de l'autre, et que, d'autre part, les deux ouvertures 23 du tube 17 sont positionnées à une distance l'une de l'autre telle que, lorsque les faces inclinées 38 des deux pieds 36 sont au contact, chacune, avec le bord intérieur de l'ouverture 23 correspondante, les deux tubes 18 sont à une distance l'un de l'autre légèrement supérieure à la longueur du tube 19 auquel on va les assembler.

A titre d'exemple, de bons résultats ont été obtenus avec un élément de liaison et des tubes ayant les caractéristiques géométriques suivantes, exprimées en millimètres ; les tubes étaient de section carrée de 19 de côté, intérieurement, l'épaisseur des parois étant de 1,5. La section du corps 35 de l'élément de liaison, également carrée, avait 16 de côté ; la hauteur de la pointe 40 du pied 36 était de 4 ; la face inclinée 38 faisant un angle de trente degrés avec la face d'appui 37 ; la longueur du pied 36, c'est-à-dire la distance transversale séparant la pointe 40 de la face arrière 41, était de 13 ; l'épaisseur du pied 36, c'est-à-dire la distance transversale séparant ses faces latérales 47 et 48, était de 8 ; l'ouverture 23 était circulaire et son diamètre de 14.

## Revendications

1. Structure tubulaire constituée par l'assemblage d'au moins trois tubes, à savoir un premier (18) et un troisième (12) liés par une de leurs extrémités à la paroi extérieure d'un deuxième tube (17), transversalement par rapport à celui-ci (17) tout en étant alignés l'un (18) par rapport à l'autre (17), le troisième tube (12) portant, au voisinage de son extrémité, une noix (20) traversée par un alésage fileté intérieurement dans lequel est vissée la tige filetée d'une vis (21) qui traverse une ouverture (22) circulaire prévue dans une paroi du deuxième tube (17) et correspondant au diamètre de ladite tige filetée, à un jeu de montage près, lequel présente dans sa paroi latérale opposée à celle-ci une ouverture (23) traversable par la tête de ladite vis (21), caractérisée par le fait que le premier tube (18) est lié au deuxième tube (17) par un élément de liaison (30) qui comporte, d'une part, un corps (35) cylindrique de section identique à la section intérieure du premier tube (18) mais de dimensions légèrement inférieures, ledit corps (35) ayant une face transversale d'appui (37) destinée à coopérer avec la paroi latérale du deuxième tube (17) au droit de l'ouverture (23) qu'elle présente, et, d'autre part, un pied (36) dont la pointe (40) est reliée à la face d'appui (37) du corps (35) par une face inclinée (38), la hauteur de la pointe (40) du pied (36) et la largeur de celui-ci (36) étant inférieures à la plus petite dimension transversale de l'ouverture (23) et la plus grande dimension transversale du pied (36) étant plus grande que la plus grande dimension transversale de ladite ouverture (23), en sorte que le pied (36) peut être introduit dans l'ouverture (23), en inclinant l'élément de liaison (30) par rapport au deuxième tube (17), mais ne peut pas retraverser l'ouverture (23) lorsque la face d'appui (37) coopère avec la paroi latérale du deuxième tube (17) qui présente l'ouverture (23) du fait de la venue en butée (51, 52), contre le bord intérieur de l'ouverture (23), de la face inclinée (38) du pied (36).

2. Structure tubulaire selon la revendication 1, caractérisée par le fait que la pointe (40) du pied (36) est axialement globalement à l'aplomb de la paroi extérieure du corps (35) et sa face arrière (41) est intérieurement en retrait par rapport à ladite paroi.

3. Structure tubulaire selon l'une des revendications 1 ou 2, caractérisée par le fait que la face arrière (41) et la plante (42) du pied sont reliées par une face convexe (39).

4. Structure tubulaire selon la revendication 3, caractérisée par le fait que la face convexe (39) est cylindrique à section polygonale.

5. Structure tubulaire selon la revendication 3, caractérisée par le fait que la face convexe est cylindrique à section circulaire.

6. Structure tubulaire selon l'une des revendications 1 à 5, caractérisée par le fait que l'élément de liaison est solidarisé au premier tube (18) par vissage.

7. Structure tubulaire selon la revendication 6, caractérisée par le fait que l'élément de liaison est muni d'un alésage transversal (34) fileté intérieurement.

8. Structure tubulaire selon l'une des revendications 1 à 7, caractérisé par le fait que la section transversale du corps (35) cylindrique de l'élément de liaison est rectangulaire ainsi que celle du premier tube (18) destiné à recevoir ledit corps (35).

9. Structure tubulaire selon la revendication 8, caractérisée par le fait que le pied (36) de l'élément de liaison est cylindrique, à génératrices parallèles à l'une des faces du corps (35).

10. Structure tubulaire selon l'une des revendications 1 à 9, caractérisée par le fait que l'ouverture (23) est circulaire et le contour apparent du pied (36) est un rectangle dont la diagonale est supérieure au diamètre de l'ouverture (23).

11. Structure tubulaire selon l'une des revendications 1 à 10, dans laquelle deux premiers tubes (18) sont reliés transversalement à un autre tube (19), caractérisée par le fait que les pieds (36) des éléments de liaison (30), associés à deux premiers tubes (18) qui se font face, sont disposés symétriquement, la face inclinée (38) de l'un tournant le dos à la face inclinée (38) de l'autre, et les deux ouvertures (23) du deuxième tube (17) sont positionnées à une distance l'une de l'autre telle que les faces inclinées (38) des deux pieds (36) ne viennent au contact, chacune, avec le bord intérieur de l'ouverture (23) correspondante, que lorsque les éléments de liaison (30) sont chacun solidarisé à un premier tube (18) par serrage de vis (31), les extrémités des premiers tubes (18) se rapprochant alors l'une de l'autre, légèrement, élastiquement.

12. Structure tubulaire selon l'une des revendications 1 à 10, dans laquelle deux premiers tubes (18) sont destinés à être reliés transversalement à un autre tube (19), caractérisée par le fait que, les éléments de liaison (30) étant chacun solidarisé à un premier tube (18), les pieds (36) des éléments de liaison (30), associés à deux premiers tubes (18) qui se font face, sont disposés symétriquement, la face inclinée (38) de l'un faisant face à la face inclinée de l'autre, et les deux ouvertures (23) du deuxième tube (17) sont positionnées à une distance l'une de l'autre telle que, lorsque les faces inclinées (38) des deux pieds (36) sont au contact, chacune, avec le bord intérieur de l'ouverture (23) correspondante, les deux premiers tubes (18) sont à une distance l'un de l'autre légèrement supérieure à la longueur de l'autre tube (19) auquel on va les relier transversalement par serrage de vis (21).
